# EUROPEAN PATENT SPECIFICATION

(11) **EP 3 096 249 B1**
(45) Date of publication and mention of the grant of the patent: **11.03.2020**
(21) Application number: 16169656.2
(22) Date of filing: 13.05.2016
(51) Int. Cl.: G06F 3/0482, G06F 16/583

(54) **METHOD AND APPARATUS FOR INDEXING AND SEARCHING THE COLOUR OF GRAPHIC ELEMENTS**
VERFAHREN UND VORRICHTUNG ZUM INDIZIEREN UND DURCHSUCHEN DIE FARBE GRAPHISCHER ELEMENTE
METHODE ET APPAREIL D'INDEXATION ET DE RECHERCHE DE LA COULEUR D'ELEMENTS GRAPHIQUES

(30) Priority: 20.05.2015 KR 20150070649
(43) Date of publication of application: 23.11.2016
(73) Proprietor: Samsung Electronics Co., Ltd., Gyeonggi-do 16677 (KR)
(72) Inventor: KIM, Ji-gwang, Seoul (KR); KIM, Joon-soo, Seoul (KR)
(74) Representative: Taor, Simon Edward William

(56) References cited:
- EP-A1- 1 302 865
- WO-A2-2005/024662
- US-A1- 2007 216 950
- US-A1- 2010 077 353
- Rachael Steven: "Predominant.ly lets you browse iTunes' library by colour", , 21 January 2015 (2015-01-21), XP055301817, Retrieved from the Internet: URL:https://www.creativereview.co.uk/predo minant-ly-lets-you-browse-itunes-library-b y-colour/ [retrieved on 2016-09-12]
- Mary Lou: "Thumbnails Preview Slider with jQuery", , 27 January 2011 (2011-01-27), XP055453792, Retrieved from the Internet: URL:https://tympanus.net/codrops/2011/01/2 7/thumbnails-preview-slider/ [retrieved on 2018-02-23]

## Description

Aspects of the exemplary embodiments relate to an electronic apparatus and a controlling method thereof, and more particularly, to an electronic apparatus to arrange sound contents according to predetermined reference and a controlling method thereof.

Recently, with the development of electronic technology, various types of electronic products have been developed and distributed. In particular, various display apparatuses such as television (TV), mobile phone, PC, notebook PC, PDA, etc. have been widely used in general households.

As the number of display apparatuses used has increased, there are growing needs for various functions of the display apparatuses. Accordingly, manufactures have made an effort to satisfy the users' needs, introducing products with new functions.

As the functions which are performed by display apparatuses have become diverse, users need to pick up and memorize significant amount of data in order to use those functions performed by display apparatuses.

In particular, if a user wishes to search one of various sound contents, the user need to remember the album name of the desired sound content, which causes inconvenience.

Therefore, a new method to allow a user to search a sound content more intuitively and emotionally is suggested.

WO2005024662 discloses an indexation method in which an average color or a statistical distribution of colors in an image is determined by providing a set of coordinates in a multidimensional color space.

An aspect of the exemplary embodiments relates to an electronic apparatus which arranges sound contents using a main color value of the sound contents and a controlling method thereof.

According to an exemplary embodiment, there is provided an electronic apparatus according to claim 1.

The processor may determine as the main color value at least one of an average color value which is calculated from pixel values of pixels included in the identification images and an average color value of at least one object which exceeds a predetermined size from among objects included in the identification images.

The identification images may include at least one of an album image, a thumbnail image and an icon image of the sound contents.

The processor may display a plurality of identification images representing each of a plurality of sound contents, and in response to a predetermined event occurring, sort the plurality of identification images by color based on a main color value of the plurality of identification images.

The user interface unit may provide a user interface area for browsing the plurality of sound contents which are arranged by color and a scroll UI for guiding a location of a sound content which is selected by a scroll interaction.

The processor may determine a sound content corresponding to a location of the scroll UI from among the plurality of sound contents which are arranged in the user interface area and plays back the sound content.

The processor may map the plurality of sound contents which are arranged by color to a horizontal direction of the user interface area and information regarding each of the plurality of sound contents to a vertical direction of the user interface area, and determine a sound content or information regarding the sound content which corresponds to an area selected by a user interaction corresponding to a horizontal direction or a vertical direction.

The processor, in response to one of the plurality of sound contents which are arranged by color being selected according to the user interaction, may provide information regarding the selected sound content on an area where a main color value of the selected sound content is processed by gradation in a vertical direction.

According to an exemplary embodiment, there is provided a controlling method of an electronic apparatus according to claim 8.

The providing a UI screen may include determining as the main color value at least one of an average color value which is calculated from pixel values of pixels included in the identification images and an average color value of at least one object which exceeds a predetermined size from among objects included in the identification images.

The identification images may include at least one of an album image, a thumbnail image and an icon image of the sound contents.

The method may further include displaying a plurality of identification images representing each of a plurality of sound contents and in response to a predetermined event occurring, sorting the plurality of identification images by color based on a main color value of the plurality of identification images.

The method may further include determining a sound content corresponding to a location of the scroll UI guiding a location of a selected sound content according to a scroll interaction from among a plurality of sound contents which are arranged in a user interface area for browsing the plurality of sound contents arranged by color and playing back the sound content.

The method may further include mapping the plurality of sound contents which are arranged by color to a horizontal direction of the user interface area and information regarding each of the plurality of sound contents to a vertical direction of the user interface area and determining a sound content or information regarding the sound content which corresponds to an area selected by a user interaction corresponding to a horizontal direction or a vertical direction.

The method may further include, in response to one of the plurality of sound contents which are arranged by color being selected according to the user interaction, providing information regarding the selected sound content on an area where a main color value of the selected sound content is processed by gradation in a vertical direction.

According to an exemplary embodiment, there is provided a non-transitory computer readable medium storing a program performing a method, the method including extracting a main color value from identification images of each of a plurality of sound contents and providing a user interface screen where identification images representing the plurality of sound contents are arranged by color based on the main color value.

According to a further example, there is provided an electronic apparatus including a display having configured to display a GUI (graphical user interface) and a processor producing the graphical user interface displayed on the display; the graphical user interface including identification images representing individual sound contents arranged by average color of the images where the images are arranged on one of a horizontal and vertical axes of the display and description information regarding the individual sound contents are arranged on a different one of the horizontal and vertical axes.

According to the various exemplary embodiments, a user may search a sound content more intuitively and emotionally without relying simply on his or her memories and thus, user convenience is improved.

The above and/or other aspects of the present concept will be more apparent by describing certain exemplary embodiments of the present concept with reference to the accompanying drawings, in which:
FIG. 1 is a block diagram illustrating configuration of an electronic apparatus according to an exemplary embodiment;
FIGS. 2 and 3 are views illustrating an example of extracting a main color value;
FIGS. 4A to 4D are views illustrating a UI screen where thumbnail images of sound contents are arranged based on color according to various exemplary embodiments;
FIG. 5 is a view illustrating a UI screen to sort a plurality of displayed identification images according to a further example;
FIG. 6 is a block diagram illustrating configuration of the electronic apparatus of FIG. 1 in detail;
FIG. 7 is a view illustrating a software module which is stored in a storage according to an exemplary embodiment;
FIGS. 8 and 9 are views provided to explain an apparatus which is realized according to various exemplary embodiments;
FIGS. 10 and 11 are views provided to explain an exemplary embodiment;
FIG. 12 is a flowchart provided to explain a controlling method of an electronic apparatus according to an exemplary embodiment; and
FIGS. 13A to 13B are views illustrating a UI screen which is changeable based on an arrangement direction according to an exemplary embodiment.

Reference will now be made in detail to the embodiments, examples of which are illustrated in the accompanying drawings, wherein like reference numerals refer to the like elements throughout. The embodiments are described below to explain the present invention by referring to the figures.

Certain exemplary embodiments are described in higher detail below with reference to the accompanying drawings. In the following description, well-known functions or constructions are not described in detail since they would obscure the application with unnecessary detail. The terms in the description are defined in consideration of the functions according to an exemplary embodiment. However, exemplary embodiments can be practiced without those specifically defined matters which may vary depending on users, intention or relation of operators. Thus, the terms shall be defined in consideration of the overall contents of the specification.

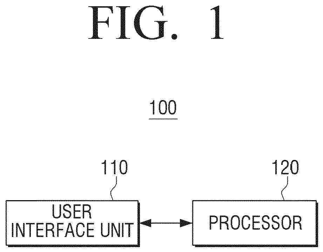

FIG. 1 is a block diagram illustrating configuration of an electronic apparatus according to an exemplary embodiment.

Referring to FIG. 1, an electronic apparatus 100 includes a user interface (UI) unit 110 and a processor 120. Here, the display apparatus 100 may be realized as various types of electronic apparatuses such as TV, electronic blackboard, electronic table, Large Format Display (LFD), smart phone, tablet, desktop PC, notebook PC, speaker, etc.

The user interface unit 110, such as a display, may provide a UI screen. Here, the UI screen refers to a screen where all information regarding a user manipulation is displayed. For example, if the electronic apparatus 100 is realized as a television (TV), the user interface unit 110 may be realized as a display. In addition, the user interface unit 110 not only provides a UI screen but also includes a user interface area for a user interface (or graphical user interface area ofr a graphical user interface) which displays a joystick for receiving a user manipulation and a system response regarding an input user manipulation, which will be described later.

The processor 120 may extract a main color value from identification images of each of a plurality of sound contents. Here, the identification images of each sound content may include at least one of an album image, a thumbnail image and an icon image of the sound content. For example, if an image corresponding to an album jacket is displayed on the user interface unit 110, the image corresponding to the album jacket may be displayed in the form of a thumbnail or an icon which may be an image to identify a sound content corresponding to the album jacket.

The sound content may refer to a single music file such as a music file, a music album, a video album regarding music, a music album including a plurality of music files, or an image album including an image file regarding music and a plurality of image files rather than just a music file. In this specification, an exemplary embodiment will be described based on the assumption that the sound content is a music album.

The processor 120 may determine as a main color value at least one of an average color value calculated from pixel values of pixels included in identification images and an average color value of at least one object of which size exceeds a predetermined size from among objects included in identification images.

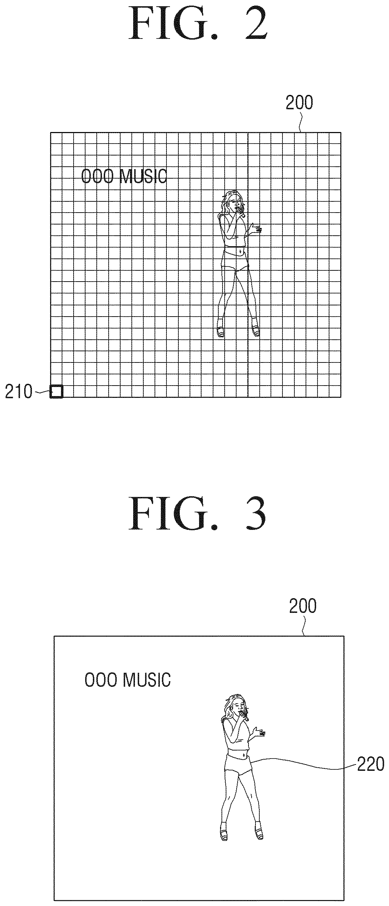

FIGS. 2 and 3 are views illustrating an example of extracting a main color value.

FIG. 2 illustrates a thumbnail image 200 of a sound content which can be displayed on the user interface unit 110, and the thumbnail image 200 includes a plurality of pixels.

Here, one pixel 210 includes a pixel value, and the processor 120 may sum up pixel values of each pixel and calculates an average color value.

For example, the pixel value of one pixel 210 may be represented as the value of #RRGGBB, and if there are a total of 1024 pixels, the values of #RRGGBB of the 1024 pixels may be summed up to calculate the average color value of the thumbnail image 200.

The processor 120 may determine the calculated average color value as the main color value of the thumbnail image 200.

FIG. 3 illustrates the thumbnail image 200 of a sound content which can be displayed on the user interface unit 110, and the thumbnail image 200 may include at least one object.

Here, the processor 120 may determine at least one of an average color value of at least one object of which size exceeds a predetermined size from among objects included in the thumbnail image 200 as a main color value.

For example, suppose that the thumbnail image 200 includes an object corresponding to a mountain and an object corresponding to a person, and the size of the object corresponding to the mountain exceeds a predetermined size whereas the size of the object corresponding to the person does not exceed the predetermined size. In this case, the processor 120 may determine the average color value of the object corresponding to the mountain, of which size exceeds the predetermined value, as a main color value of the thumbnail image 200.

In FIG. 3, the thumbnail image 200 includes the text of "000 music" and an object 220 corresponding to a person, and the processor 120 may determine that the size of the object 220 corresponding to the person exceeds a predetermined size, calculate an average color value from pixel values of a plurality of pixels included in the object 220 corresponding to the person, and determine the calculated average color value which corresponds to the object 220 corresponding to the person as a main color value. Here, the process of calculating the average color value which corresponds to the object 220 corresponding to the person is the same as the process described in FIG. 2.

Meanwhile, the processor 120 may provide a UI screen where identification images representing a plurality of sound contents are arranged based on the calculated main color value through the user interface unit 110.

For example, if it is assumed that the main color value of a thumbnail image representing a first sound content is red, the main color value of a thumbnail image representing a second sound content is red, the main color value of a thumbnail image representing a third sound content is yellow, the main color value of a thumbnail image representing a fourth sound content is blue, and the main color value of a thumbnail image representing a fifth sound content is yellow, the processor 120 may provide a UI screen where the first sound content and the second sound content are disposed on the same area, the third sound content and the fifth sound content are disposed on the same area, and the fourth sound content is disposed separately.

Here, for example, the area where the thumbnail image of the first sound content and the thumbnail image of the second sound content are disposed may include the red color, the area where the thumbnail image of the third sound content and the thumbnail image of the fifth sound content are displayed may include the yellow color, and the area where the thumbnail image of the fifth sound content is disposed may include the blue color.

In addition, the order of disposing the area where the thumbnail image of the first sound content and the thumbnail image of the second sound content are disposed, the area where the thumbnail image of the third sound content and the thumbnail image of the fifth sound content are displayed, and the area where the thumbnail image of the fifth sound content is disposed may be changed according to a user manipulation.

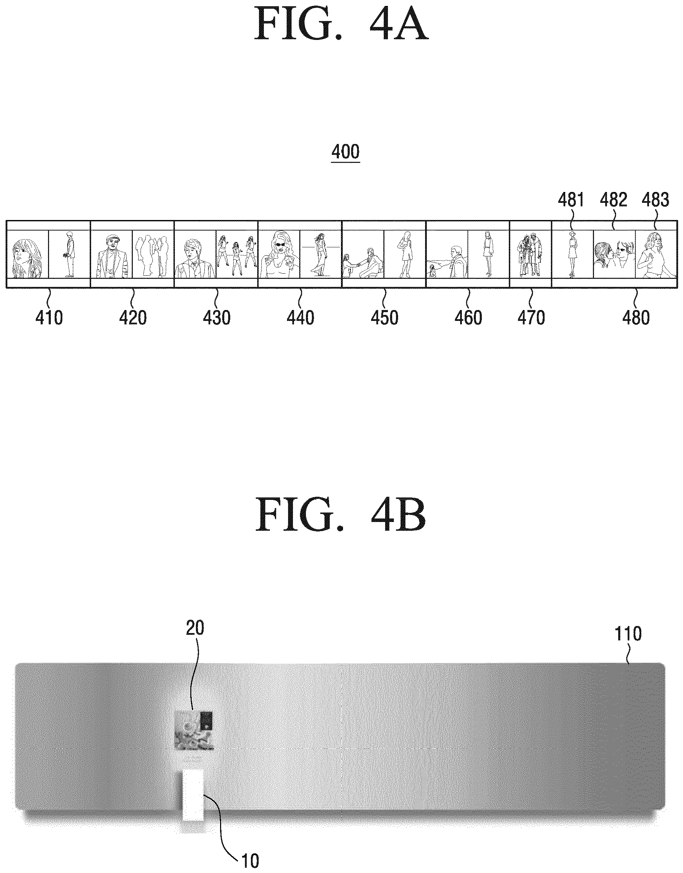

FIGS. 4A to 4D are views illustrating a UI screen where thumbnail images of sound contents are arranged based on color according to various examples and exemplary embodiments.

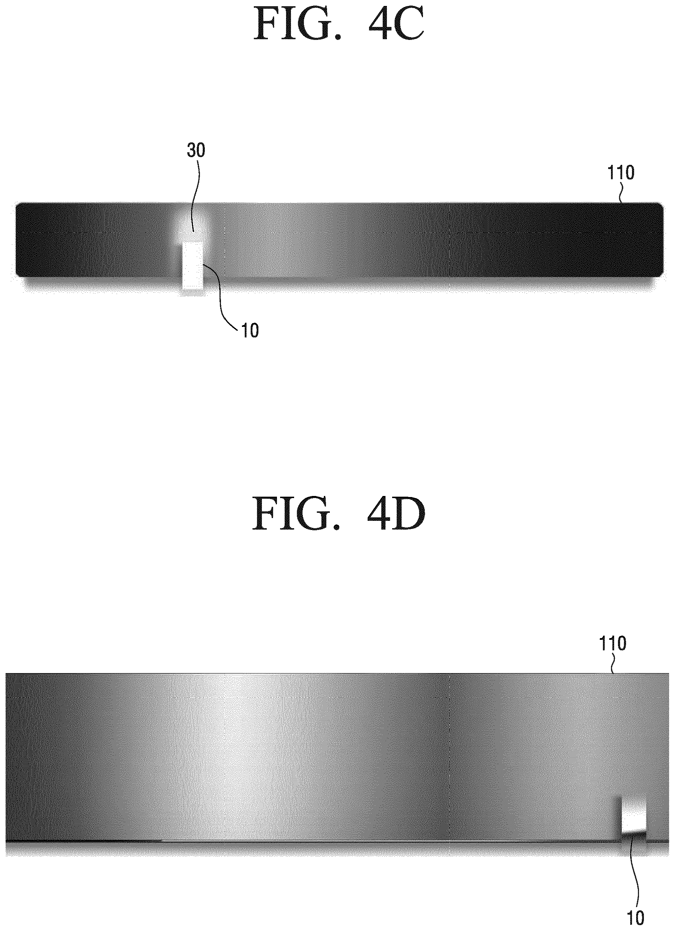

FIG. 4 illustrates a spectrum 400 where a plurality of areas 410, 420, 430, 440, 450, 460, 470, 480 including different colors are arranged by color, and a thumbnail image of at least one sound content is disposed in each area. Here, the spectrum 400 is defined as a list of the plurality of areas 410, 420, 430, 440, 450, 460, 470, 480 including different colors.

For example, the first area 410 may be an area including black color, the second area 420 may be an area including purple color, the third area 430 may be an area including navy color, the fourth area 440 may be an area including blue color, the fifth area 450 may be an area including green color, the sixth area 460 may be an area including yellow color, the seventh area 470 may be an area including orange color, and the eighth area may be an area including red color. In FIG. 4A, the areas including each color are arranged in the order of rainbow color, but this is only an example. The order of colors may be changed according to a user manipulation.

The thumbnail images of the plurality of sound contents may be disposed on the corresponding areas of the plurality of areas 410, 420, 430, 440, 450, 460, 470, 480 based on the main color value of each thumbnail image and accordingly, the thumbnail images of the plurality of sound contents may be arranged by color.

In FIG. 4A, thumbnail images 481, 482, 483 of sound contents are arranged in the area 480 including red color, which means that the main color value of the thumbnail images 481, 482, 483 of the sound contents is red color.

As such, by disposing thumbnail images of sound contents whose main color values are similar in a single area, the thumbnail images of a plurality of sound contents may be arranged by color.

Meanwhile, the color of the first area 410 and the color of the second area 420 may be processed by gradation in an area where the first area 410 and the second 420 are connected so that the first area 410 and the second area 420 can be connected smoothly, which can be applied to an connection area of other areas.

Accordingly, a user may search a desired sound content based on a color which takes up the significant part of an album jacket image when selecting one of a plurality of sound contents.

Meanwhile, referring to FIG. 4B, when a plurality of areas including different colors are arranged on the user interface unit 110 by color and each area is matched to a thumbnail image of at least one sound content as illustrated in FIG. 4A, if a user interface apparatus 10 such as a joystick is located at one of the plurality of areas, a thumbnail image 20 matched to the corresponding area may be displayed. In other words, the thumbnail images of sound contents which are matched to the plurality of areas, respectively, need not be displayed continuously and instead, only the thumbnail image 20 of the sound content which is matched to the area where the user interface apparatus 10 such as a joystick is located may be displayed.

In addition, referring to FIG. 4C, unlike FIG. 4B, when a plurality of areas including different colors are arranged on the user interface unit 110 by color and each area is matched to a thumbnail image of at least one sound, if the user interface apparatus 10 such as a joystick is located at one of the plurality of areas, a color 30 corresponding to the area may be displayed. In other words, unlike FIG. 4 where the thumbnail image 20 of the sound content which is matched to the area where the user interface apparatus 10 such as a joystick is located is displayed, the color 30 corresponding to the area may be displayed, and the color 30 is the same as the main color value of the thumbnail image 20 of the sound content which is matched to the corresponding area.

Meanwhile, unlike FIG. 4A where thumbnail images of at least one sound content are matched to each area of the spectrum 400 including the plurality of areas 410, 420, 430, 440, 450, 460, 470, 480 including different colors are arranged and displayed, FIG. 4D illustrates that only a spectrum where a plurality of areas including different colors are arranged by color is displayed on the user interface unit 110. Here, the different colors correspond to main color values of thumbnail images of sound contents included in each of the plurality of areas, and the processor 120 may play back a sound content corresponding to the color of the area where the user interface apparatus 10 such as a joystick is located automatically without displaying the thumbnail image of the sound content. Of course, if the user interface apparatus 10 such as a joystick is located at one area, the processor 120 may determine the color of the corresponding area and display thumbnail images of at least one sound content including the determined color so that a user may select a desired sound content.

Accordingly, a user may search a sound content corresponding to each color based on a plurality of colors which are displayed on the user interface unit 110 without looking at the thumbnail images of sound contents.

Meanwhile, in the above examples and exemplary embodiments, the processor 120 provides a UI screen where identification images representing a plurality of sound contents are arranged by color, but the processor 120 may display a plurality of identification images representing each of a plurality of sound contents, and if a predetermined event occurs, may sort the plurality of identification images by color based on the main color values of the plurality of identification images.

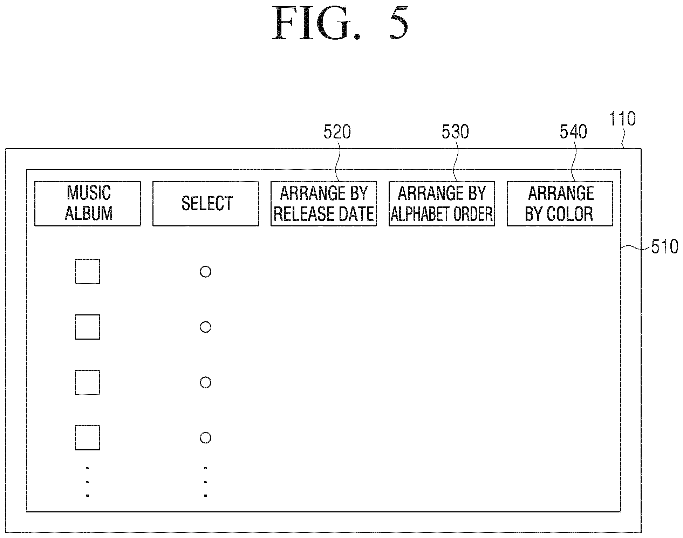

FIG. 5 is a view illustrating a UI screen to sort a plurality of displayed identification images according to an example.

Referring to FIG. 5, while thumbnail images of a plurality of music album jackets are arranged in a vertical direction, a Graphic User Interface (GUI) to select each music album may be displayed and also, a UI screen 510 displaying a release date arrangement tab 520 to arrange albums according to their release date, an alphabet arrangement tab 530 to arrange albums alphabetically based on the name of albums and a color arrangement tab 540 to arrange albums based on the main color values of thumbnail images of album jackets may be displayed through the user interface unit 110.

Accordingly, if a predetermined event to select the color arrangement tab 540 occurs according to a user manipulation on the UI screen 510 while a plurality of identification images representing each of a plurality of sound contents are displayed, the plurality of identification images may be sorted by color based on the main color values of the plurality of identification images.

Meanwhile, in FIG. 5, the color arrangement tab 540 to sort a plurality of identification images representing each of a plurality of sound contents is displayed and if a user selects the color arrangement tab 540, the processor 120 may sort the plurality of identification images by color. However, the processor 120 may sort a plurality of identification images by color when a user shakes the electronic apparatus 100 from left to right or a voice command of "arrange by color" is input.

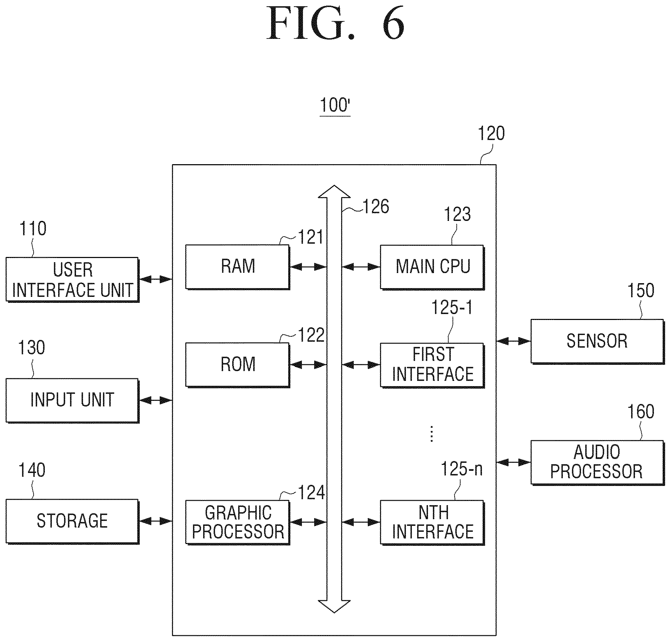

FIG. 6 is a block diagram illustrating the specific configuration of the electronic apparatus of FIG 1.

Referring to FIG. 6, an electronic apparatus' includes a user interface unit 110, the processor 120, an input unit 130, a storage 140, a sensor 150, and an audio processor 160. The detailed description regarding the elements which are overlapped with those in FIG. 1 will not be provided.

The processor 120 controls the overall operations of the electronic apparatus 100.

Specifically, the processor 120 includes a RAM 121, a ROM 122, a main CPU 123, a graphic processor 124, a first to nth interface 125-1∼125-n, and a bus 126.

The RAM 121, the ROM 122, the main CPU 123, the graphic processor 124, the first to the nth interface 125-1∼125-n, etc. may be interconnected through the bus 126.

The first to the nth interface 125-1 to 125-n are connected to the above-described various elements. One of the interface may be network interface which is connected to an external apparatus via network.

The main CPU 123 accesses the storage 140, and performs booting using an Operating System (O/S) stored in the storage 140. In addition, the main CPU 123 performs various operations using various programs, contents, data, etc. which are stored in the storage 140.

The ROM 122 stores a set of commands for system booting. If a turn-on command is input and thus, power is supplied, the main CPU 123 copies O/S stored in the storage 140 in the RAM 121 according to a command stored in the ROM 122, and boots a system by executing the O/S. When the booting is completed, the main CPU 123 copies various application programs stored in the storage 140 in the RAM 121, and executes the application programs copied in the RAM 121 to perform various operations.

The graphic processor 124 generates a screen including various objects such as an icon, an image, a text, etc. using an computing unit (not shown) and a rendering unit (not shown). The computing unit computes property values such as coordinates, shape, size, and color of each object to be displayed according to the layout of the screen using a control command received from an input unit. The rendering unit generates a screen with various layouts including objects based on the property values computed by the computing unit. The screen generated by the rendering unit may be displayed through the user interface unit 110.

In particular, the graphic processor 124 may display identification images of each of a plurality of sound contents, and perform the function of displaying a main color value which is extracted from each identification image.

Meanwhile, the operations of the above-described processor 120 may be performed by a program stored in the storage 140.

The storage 140 stores various data such as Operating System (O/S) to drive the electronic apparatus 100', software modules, and various multimedia contents.

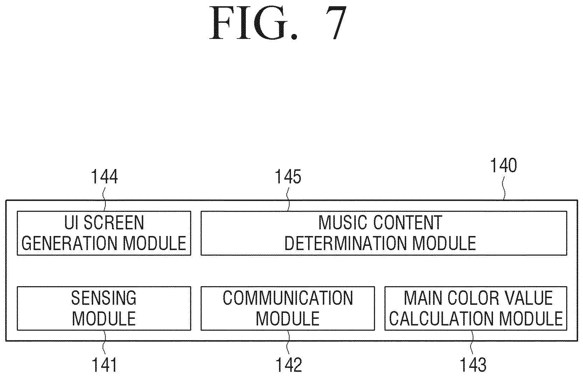

In particular, the storage 140 includes various software modules to provide a UI screen where the processor 120 extracts main color values from an identification images of each of a plurality of sound contents and the identification representing the plurality of sound contents are arranged based on the main color values, which will be described in detail with reference to FIG. 7.

Meanwhile, the sensor 150 may include various sensors such as a touch sensor to detect a touch, a motion sensor to detect a user's movement. In addition, the sensor 150 may further include a sensor to detect a movement and trace of an electronic pen.

The audio processor 160 may process an audio signal in accordance with a user setting regarding an output range and sound quality. In addition, the audio processor 160 may output an audio signal by playing back a selected sound content.

The electronic apparatus 100' may be realized as an apparatus such as TV, PDA, notebook PC, desktop PC, smart phone, speaker, etc.

FIG. 7 is a view illustrating a software module which is stored in a storage according to an exemplary embodiment.

Referring to FIG. 7, the storage 140 may store programs such as a sensing module 141, a communication module 142, a main color value calculation module 143, a UI screen generation module 144, a music content determination module 145, etc.

Meanwhile, the operations of the above-described processor 120 may be performed by a program stored in the storage 140. Hereinafter, the specific operations of the processor 130 using a program stored in the storage 140 will be described in detail.

The sensing module 141 collects information from various sensors, and analyzes and manages the collected information. Here, the sensing module 141 may include a distance recognition module, a touch recognition module, a head direction recognition module, a face recognition module, a voice recognition module, a motion recognition module, an NFC recognition module, etc.

The communication module 142 performs communication with outside. The communication module 142 may include a device module which is used for communication with an external apparatus, a messaging module such as a messenger program, a Short Message Service (SMS) & Multimedia Message Service (MMS) program, an e-mail program, etc., and a telephone module including a call info aggregator program module, a VoIP module, etc.

In particular, the communication module 142 according to an exemplary embodiment may receive sound contents and information regarding sound contents from an external server or an external apparatus.

The main color value calculation module 143 perform the function of extracting main color values from identification images of each of a plurality of sound contents. In particular, the main color value calculation module 143 may perform the function of determining at least one of an average color value which is calculated from pixel values of pixels included in identification images and an average color value of at least one object of which size exceeds a predetermined size from among objects included in identification images as a main color value.

The UI screen generation module 144 may perform the function of generating a UI screen where identification images representing a plurality of sound contents are arranged by color.

The music content determination module 145 may perform the function of determining a sound content corresponding to the location of a scroll UI from among a plurality of sound contents which are arranged and displayed in the user interface unit 110, which will be described later in detail.

As such, the processor 130 may extract a main color value from identification images of each of a plurality of sound contents by using various software modules stored in the storage 140, and provide a UI screen where the identification images representing a plurality of sound contents are arranged by color based on the main color value.

Meanwhile, the user interface unit 110 may provide a user interface area for browsing a plurality of sound contents which are arranged by color and a scroll UI for guiding the location of a sound content which is selected according to a scroll interaction.

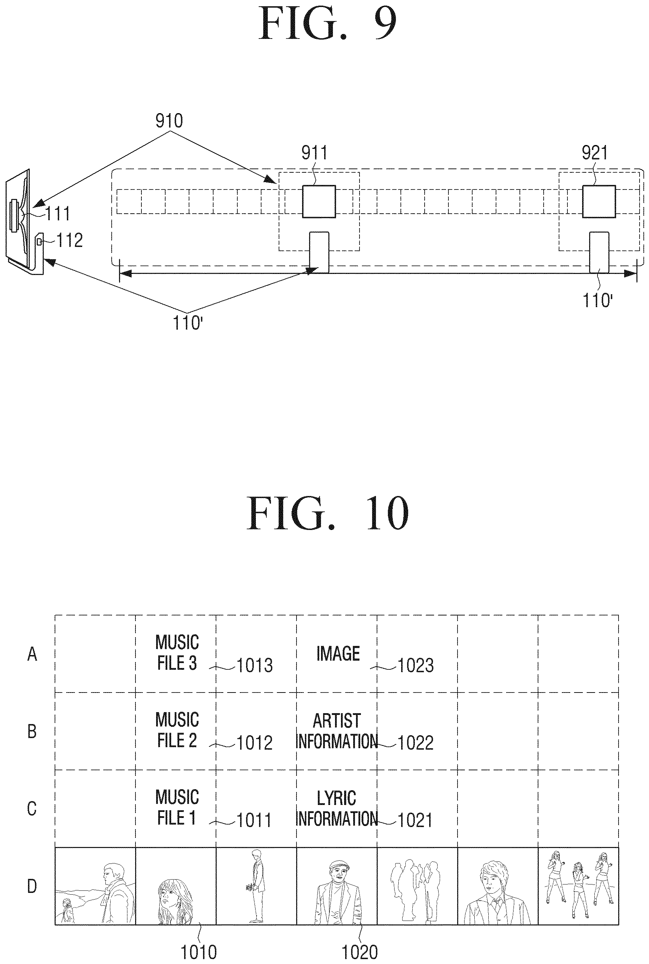

Here, the user interface unit 110 may refer to a screen which displays a user interface area and a scroll UI, but may also refer to a scroll UI which is realized as a physical user interface area or a physical apparatus such as a joystick, which will be described with reference to FIG. 9.

Meanwhile, the processor 120 may determine and play back a sound content corresponding to the location of a scroll UI from among a plurality of sound contents which are arranged in a user interface area.

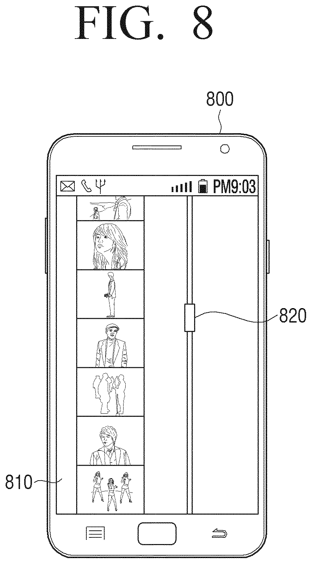

FIGS. 8 and 9 are views provided to explain an apparatus which is realized according to various examples.

Referring to FIG. 8, the electronic apparatus 100 is realized as a smart phone 800, a smart phone 900 may provide a UI screen 810 where identification images representing a plurality of sound contents are arranged by color based on a main color value of each of the plurality of sound contents, and a scroll UI 820 for browsing identification images representing a plurality of sound contents which are arranged by color may also be provided.

Accordingly, a user may search an identification image corresponding to a desired sound content from among identification images representing a plurality of sound contents which are arranged by color by moving the scroll UI 820 according to a touch manipulation.

Meanwhile, the scroll UI 820 may change a color in accordance with an identification image representing a plurality of sound contents which are arranged by color. For example, the color of the scroll UI 820 may be changed to red in a red color area, and the color of the scroll UI 820 may be changed to blue in a blue color area.

Referring to FIG. 9, the electronic apparatus 100 relates to a sound output apparatus with a joystick which performs the same functions as a scroll UI and thus, the sound output apparatus may be realized in a wall-mounted form or in a cradle form, but is not limited thereto.

In particular, the drawing on the left side illustrates a speaker 111, a cover in the front side of the speaker 111, and a user interface apparatus 100'. Here, the cover may be used as a user interface area for browsing sound contents, and the user interface apparatus 110' includes a scroll UI which is realized in a physical form. In addition, the user interface apparatus 100' includes a projector, and the projector may project an image on a user interface area.

Specifically, the drawing on the right side illustrates the front side of the cover, that is, a user interface area where an image projected from the projector is displayed, and it can be seen that the user interface apparatus 100' which is mobile is located at the front side of the user interface area.

In addition, the image which is projected from the projector of the user interface apparatus 100', that is, the identification image representing a sound content may be displayed in a form of a GUI 911 on an area 910 corresponding to the location of the user interface apparatus 100' out of the user interface area.

Here, the GUI 911 may include an identification image representing a sound content which is selected in accordance with the location with the user interface apparatus 100'.

In addition, if the user interface apparatus 100' moves according to a user manipulation or a control signal received from a remote controller and thus, the location thereof is changed, the processor 120 may project through a projector an identification image 921 related to a selected sound content on an area corresponding to the changed location of the user interface apparatus 110' based on the amount of the movement of the user interface apparatus 110' which is detected through the sensor 150.

As such, the user interface 110 may include not only a display for simply providing a UI screen but also a user interface area which is realized physically and the user interface apparatus 110' where a scroll UI is realized physically.

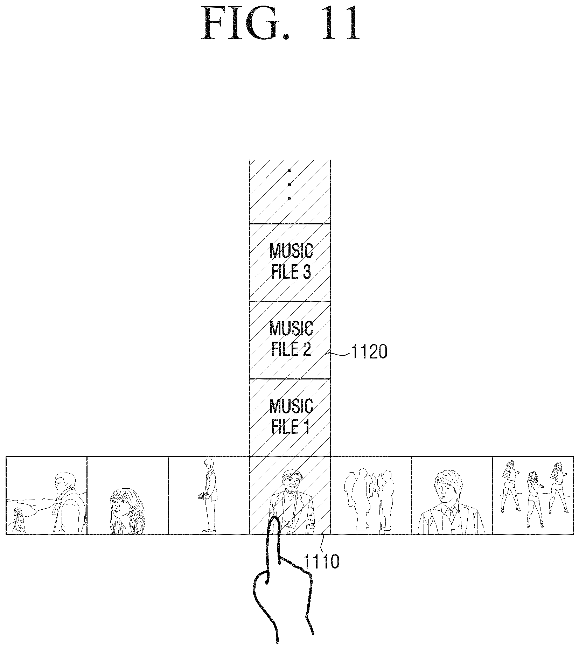

FIGS. 10 and 11 are views provided to explain an example.

Here, the processor 120 may map a plurality of sound contents which are arranged by color to a horizontal direction on a user interface area, map information regarding each of the plurality of sound contents to a vertical direction on the user interface area, and determine a sound content or information regarding a sound content corresponding to an area which is selected according to a user interaction corresponding to the horizontal direction or the vertical direction.

In other words, the processor 120 may provide not only a plurality of sound contents which are arranged by color but also information regarding each sound content such that the plurality of sound contents which are arranged by color are mapped to a horizontal direction and information regarding each of the plurality of sound contents is mapped to a vertical direction.

For example, referring to FIG. 9, the processor 120 may arrange a plurality of sound contents by color, mapping the sound contents to row D, and map information regarding each sound content to rows A, B and C. Here, rows A, B and C may be visible to a user. Alternatively, rows A, B and C may be visible to a user, but may be mapped to sound contents such that rows A, B and C are visible only when a user selects a sound content arranged in row D.

In particular, FIG. 9 illustrates that information related to an identification image 1010 of a first sound content may include a plurality of music files included in the first sound content, and the plurality of music files are provided such that each area 1011, 1012, 1013 of rows A, B and C are mapped to a vertical direction which includes the identification image 1010 of the first sound content.

In addition, FIG. 9 illustrates that information regarding an identification image 1020 of the second sound content may include lyric information, artist information, images, etc. of the second content, and the lyric information, the artist information, the images, etc. may be mapped to each area 1021, 1022, and 1023 of rows A, B and C in a vertical direction including the identification image 1020 of the second sound content and provided.

Meanwhile, if one of a plurality of sound contents which are arranged by color is selected according to a user interaction, the processor 120 may provide information regarding the selected sound content in an area where a main color value of the selected sound content is processed by gradation in a vertical direction.

Referring to FIG. 11, if an indicator selects according to a user interaction a sound content 1110 from among a plurality of sound contents which are arranged by color, the processor 120 may generate an area 1120 where a main color value of the selected sound content 1110 is processed by gradation in a vertical direction and provide music files 1, 2 and 3 which are information related to the music content 110 on the area 1120 which is processed by gradation.

Meanwhile, the function of the processor 120 of extracting main color values from identification images of a plurality of sound contents and providing a UI screen where the identification images representing the plurality of sound contents are arranged by color based on the main color values may also be applied to group or arrange application icons having various colors by color, and to group or arrange icons or GUIs corresponding to each book by color in a UI screen regarding a bookshelf where various books such as E-books are arranged.

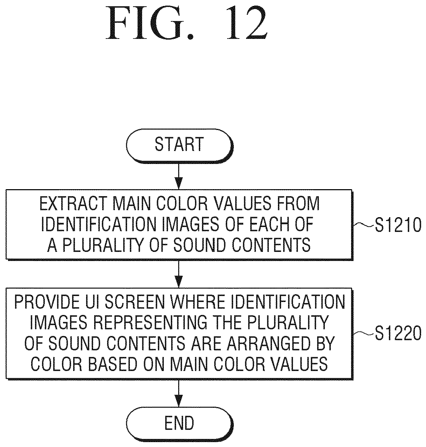

FIG. 12 is a flowchart provided to explain a controlling method of an electronic apparatus according to an exemplary embodiment.

Referring to the controlling method of an electronic apparatus including a user interface unit which provides a UI screen illustrated in FIG. 12, main color values may be extracted from identification images of each of a plurality of sound contents (S1210).

A UI screen where the identification images representing the plurality of sound contents are arranged by color based on the main color values may be provided (S1220).

Here, the step of providing a UI screen may include determining at least one of an average color value which is calculated from pixel values of pixels included in the identification images and an average color value of at least one object of which size exceeds a predetermined size from among objects included in the identification images as a main color value.

Here, the identification images may include at least one of an album image of a sound content, a thumbnail image and an icon image.

Meanwhile, the controlling method of an electronic apparatus according to an exemplary embodiment may further include displaying a plurality of identification images representing each of a plurality of sound contents and in response to a predetermined event occurring, sorting the plurality of identification images by color based on the main color values of the plurality of identification images.

In addition, the controlling method of an electronic apparatus according to an exemplary embodiment may further include determining a sound content corresponding to the location of a scroll UI guiding the location of a sound content which is selected according to a scroll interaction from among a plurality of sound contents arranged in a user interface area for browsing the plurality of sound contents which are arranged by color.

Further, the controlling method of an electronic apparatus according to an exemplary embodiment may further include mapping a plurality of sound contents which are arranged by color to a horizontal direction on a user interface area, mapping information regarding each of the plurality of sound contents to a vertical direction on the user interface area, and determining a sound content or information regarding a sound content corresponding to an area which is selected according to a user interaction corresponding to the horizontal direction or the vertical direction.

The controlling method of an electronic apparatus according to an exemplary embodiment may further include, in response to one of a plurality of sound contents which are arranged by color being selected according to a user interaction, providing information regarding the selected sound content in an area where the main color value of the selected sound content is processed by gradation in a vertical direction.

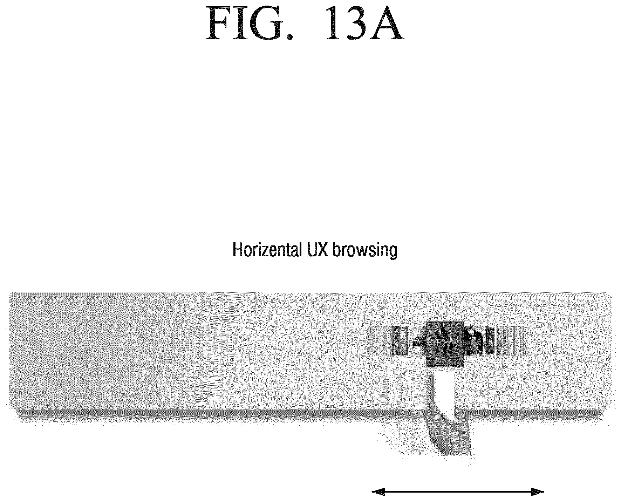

Meanwhile, FIGS. 13A to 13B are views illustrating a UI screen which is changeable based on an arrangement direction according to an exemplary embodiment.

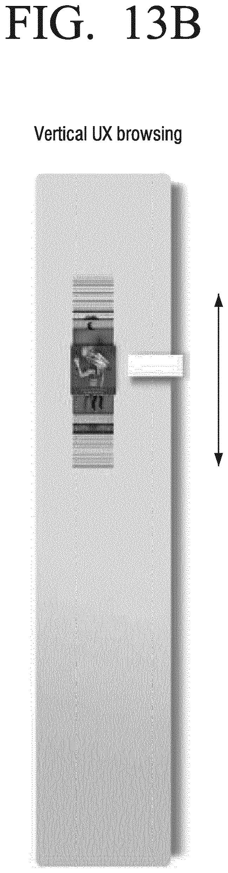

Referring to FIGS. 13A and 13B, the processor 120 may display a UI screen where identification images representing a plurality of sound contents differently according to the arrangement direction of the electronic apparatus 100.

Specifically, as illustrated in FIG. 13A, if the electronic apparatus 100 is disposed in a horizontal direction, the processor 120 may display a UI screen where identification images representing a plurality of sound contents are arranged by color in the horizontal direction, and as illustrated in FIG. 13B, if the electronic apparatus 100 is disposed in a vertical direction, the processor 120 may rotate the UI screen where the identification images representing the plurality of sound contents are arranged by color by 90° and display the UI screen in a vertical direction so that the UI screen may be displayed in accordance with a user's gaze.

As such, the processor 120 may display a UI screen according to the arrangement direction of the electronic apparatus 100 so that the UI screen may be displayed in accordance with a user's gaze.

Meanwhile, a non-transitory computer readable medium which stores a program for performing the controlling method according to an exemplary embodiment sequentially may be provided.

For example, a non-transitory computer readable medium which stores a program for performing the steps of extracting main color values from identification images of each of a plurality of sound contents and providing a UI screen where the identification images representing the plurality of sound contents are arranged by color based on the main color values may be provided.

The non-transitory recordable medium refers to a medium which may store data semi-permanently rather than storing data for a short time, such as register, cache, memory, etc. and is readable by an apparatus. Specifically, the above-described various applications and programs may be stored and provided in a non-transitory computer recordable and readable medium such as CD, DVD, hard disk, Blu-ray disk, USB, memory card, ROM, etc.

Although a bus is not illustrated in the above-described block diagram regarding an electronic apparatus, communication between elements of the electronic apparatus may be performed through a bus. In addition, each device may further include a CPU for performing the above-described various steps and a processor such as a micro processor.

The foregoing embodiments and advantages are merely exemplary and are not to be construed as limiting the embodiments. The present teaching can be readily applied to other types of apparatuses. Also, the description of the exemplary embodiments of the present concept is intended to be illustrative, and not to limit the scope of the claims, and many alternatives, modifications, and variations will be apparent to those skilled in the art.

Although a few embodiments have been shown and described, it would be appreciated by those skilled in the art that changes may be made in these embodiments without departing from the principles of the invention, the scope of which is defined in the claims.

## Claims

1. An electronic apparatus (100), comprising:
a display configured to provide a user interface, UI, screen (510), the UI screen comprising a UI element (110) including a plurality of areas, each area corresponding to at least one sound content, respectively; and
a processor (120) configured to
acquire a main color value from images related to the sound contents, respectively, based on an average color value of an object which exceeds a preset size from among the objects included in the image,
control the display to display the UI element (110), and when a user interface apparatus (10) is located at one of the plurality of areas, control the display to provide a thumbnail image of a sound content corresponding to the one of the plurality of areas on the UI element (110), wherein thumbnail images of sound content corresponding to areas other than the one of the plurality of areas are not displayed on the UI element (110).

2. The apparatus as claimed in claim 1, wherein the images related to the plurality of sound contents include at least one of an album image, a thumbnail image (200, 20) and an icon image of the sound contents.

3. The apparatus as claimed in any one of claims 1 or 2, wherein the processor is configured to display a plurality of images representing each of a plurality of sound contents, and in response to a predetermined event occurring, sorts the plurality of identification images by color based on a main color value of the plurality of identification images.

4. The apparatus as claimed in any one of claims 1 to 3, wherein the display is configured to provide a user interface area for browsing the plurality of sound contents which are disposed based on the extracted main color values and a scroll UI for guiding a location of a sound content which is selected by a scroll interaction.

5. The apparatus as claimed in claim 4, wherein the processor is configured to determine a sound content corresponding to a location of the scroll UI from among the plurality of sound contents which are disposed in the user interface area and plays back the sound content.

6. The apparatus as claimed in claim 5, wherein the processor is configured to map the plurality of sound contents which are disposed based on the extracted main color values to a horizontal direction of the user interface area and information regarding each of the plurality of sound contents to a vertical direction of the user interface area, and is configured to determine one of a sound content and information regarding the sound content which corresponds to an area selected by a user interaction corresponding to one of the horizontal direction and the vertical direction.

7. The apparatus as claimed in claim 6, wherein the processor, in response to one of the plurality of sound contents which are disposed based on the extracted main color values being selected according to the user interaction, is configured to provide information regarding the selected sound content on an area where a main color value of the selected sound content is processed by gradation in a vertical direction.

8. A controlling method of an electronic apparatus including a display which provides a user interface, UI, screen, the UI screen comprising a UI element (110) including a plurality of areas, each area corresponding to at least one sound content, respectively, the method comprising:
aquiring a main color value from images related to the sound contents, respectively, based on an average color value of an object which exceeds a preset size from among the objects included in the image;
displaying the UI element (110), and when a user interface apparatus (10) is located at one of the plurality of areas, controlling the display to provide a thumbnail image of a sound content corresponding to the one of the plurality of areas on the UI element (110), wherein thumbnail images of sound content corresponding to areas other than the one of the plurality of areas are not displayed on the UI element (110).

9. The method as claimed in claim 8, wherein the images related to the plurality of sound contents include at least one of an album image, a thumbnail image and an icon image of the sound contents.

10. The method as claimed in any one of claims 8 or 9, further comprising:
displaying a plurality of images representing each of a plurality of sound contents; and
in response to a predetermined event occurring, sorting the plurality of identification images by color based on a main color value of the plurality of identification images.

11. The method as claimed in any one of claims 8 to 10, wherein the content includes sound content, the method further comprising:
determining a sound content corresponding to a location of a scroll UI guiding a location of a selected sound content according to a scroll interaction from among a plurality of sound contents which are disposed in a user interface area for browsing the plurality of sound contents disposed based on the extracted main color values and playing back sound content.

12. The method as claimed in claim 11, further comprising:
mapping the plurality of sound contents which are disposed based on the extracted main color values to a horizontal direction of the user interface area and information regarding each of the plurality of sound contents to a vertical direction of the user interface area; and
determining one of a sound content and information regarding the sound content which corresponds to an area selected by a user interaction corresponding to one of the horizontal direction and the vertical direction.

13. The method as claimed in claim 12, further comprising:
in response to one of the plurality of sound contents which are disposed based on the extracted main color values being selected according to the user interaction, providing information regarding the selected sound content on an area where a main color value of the selected sound content is processed by gradation in a vertical direction.

## Patentansprüche

1. Elektronische Vorrichtung (100), die Folgendes umfasst:
ein Display, das so konfiguriert ist, dass es eine Benutzerschnittstellen-(BS)-Anzeige (510) bereitstellt, wobei die BS-Anzeige ein BS-Element (110) mit mehreren Bereichen umfasst, von denen jeder jeweils mindestens einem Toninhalt entspricht, und
einen Prozessor (120), der so konfiguriert ist, dass er
jeweils auf der Grundlage eines mittleren Farbwerts eines Objekts unter den Objekten in dem Bild, das eine vorgegebene Größe überschreitet, aus zu den Toninhalten gehörigen Bildern einen Hauptfarbwert erfasst,
das Display so steuert, dass es das BS-Element (110) anzeigt, und
wenn sich in einem der mehreren Bereiche eine Benutzerschnittstellenvorrichtung (10) befindet, das Display so steuert, dass es entsprechend dem einen unter den mehreren Bereichen auf dem BS-Element (110) ein Miniaturbild für einen Toninhalt bereitstellt, wobei Miniaturbilder für Toninhalte, die anderen Bereichen als dem einen der mehreren Bereiche entsprechen, nicht auf dem BS-Element (110) angezeigt werden.

2. Vorrichtung nach Anspruch 1, wobei zu den zu den mehreren Toninhalten gehörigen Bildern ein Albumbild, ein Miniaturbild (200, 20) und/oder ein Symbolbild für die Toninhalte gehört.

3. Vorrichtung nach einem der Ansprüche 1 und 2, wobei der Prozessor so konfiguriert ist, dass er mehrere Bilder anzeigt, die jeden von mehreren Toninhalten darstellen, und als Reaktion auf das Auftreten eines vorgegebenen Ereignisses die mehreren Erkennungsbilder auf der Grundlage eines Hauptfarbwerts der mehreren Erkennungsbilder nach Farbe sortiert.

4. Vorrichtung nach einem der Ansprüche 1 bis 3, wobei das Display so konfiguriert ist, dass es einen Benutzerschnittstellenbereich zum Durchsuchen der mehreren Toninhalte, die auf der Grundlage der extrahierten Hauptfarbwerte angeordnet sind, und eine Such-BS zum Bewegen einer Position eines Toninhalts bereitstellt, der durch eine Suchinteraktion ausgewählt wird.

5. Vorrichtung nach Anspruch 4, wobei der Prozessor so konfiguriert ist, dass er unter den mehreren Toninhalten, die in dem Benutzerschnittstellenbereich angeordnet sind, entsprechend einer Position der Such-BS einen Toninhalt bestimmt und den Toninhalt abspielt.

6. Vorrichtung nach Anspruch 5, wobei der Prozessor so konfiguriert ist, dass er die mehreren auf der Grundlage der extrahierten Hauptfarbwerte angeordneten Toninhalte in horizontaler Richtung des Benutzerschnittstellenbereichs und Informationen bezüglich jedes der mehreren Toninhalte in vertikaler Richtung des Benutzerschnittstellenbereichs abbildet, und so konfiguriert ist, dass er einen Toninhalt oder eine Information bezüglich des Toninhalts bestimmt, der/die einem über eine Benutzerinteraktion ausgewählten Bereich entsprechend der horizontalen oder der vertikalen Richtung entspricht.

7. Vorrichtung nach Anspruch 6, wobei der Prozessor so konfiguriert ist, dass er als Reaktion darauf, dass einer der mehreren Toninhalte, die auf der Grundlage der extrahierten Hauptfarbwerte angeordnet sind, gemäß der Benutzerinteraktion ausgewählt wird, Informationen bezüglich des ausgewählten Toninhalts in einem Bereich bereitstellt, in dem ein Hauptfarbwert des ausgewählten Toninhalts durch Abstufung in vertikaler Richtung verarbeitet wird.

8. Steuerverfahren für eine elektronische Vorrichtung mit einem Display, das eine Benutzerschnittstellen-(BS)-Anzeige bereitstellt, wobei die BS-Anzeige ein BS-Element (110) mit mehreren Bereichen umfasst, von denen jeder jeweils mindestens einem Toninhalt entspricht, wobei das Verfahren Folgendes umfasst:
Erfassen eines Hauptfarbwerts aus zu den Toninhalten gehörigen Bildern jeweils auf der Grundlage eines mittleren Farbwerts eines Objekts unter den Objekten in dem Bild, das eine vorgegebene Größe überschreitet,
Anzeigen des BS-Elements (110) und,
wenn sich in einem der mehreren Bereiche eine Benutzerschnittstellenvorrichtung (10) befindet, derartiges Steuern des Displays, dass es entsprechend dem einen unter den mehreren Bereichen auf dem BS-Element (110) ein Miniaturbild für einen Toninhalt bereitstellt, wobei Miniaturbilder für Toninhalte, die anderen Bereichen als dem einen der mehreren Bereiche entsprechen, nicht auf dem BS-Element (110) angezeigt werden.

9. Verfahren nach Anspruch 8, wobei zu den zu den mehreren Toninhalten gehörigen Bildern ein Albumbild, ein Miniaturbild oder/und ein Symbolbild für die Toninhalte gehört.

10. Verfahren nach einem der Ansprüche 8 und 9, das ferner Folgendes umfasst:
Anzeigen mehrerer Bilder, die jeden von mehreren Toninhalten darstellen, und
als Reaktion auf das Auftreten eines vorgegebenen Ereignisses, Sortieren der mehreren Erkennungsbilder auf der Grundlage eines Hauptfarbwerts der mehreren Erkennungsbilder nach Farbe.

11. Verfahren nach einem der Ansprüche 8 bis 10, wobei der Inhalt Toninhalt umfasst, wobei das Verfahren ferner Folgendes umfasst:
Bestimmen eines Toninhalts entsprechend einer Position einer Such-BS zum Bewegen einer Position eines ausgewählten Toninhalts gemäß einer Suchinteraktion unter mehreren Toninhalten, die in einem Benutzerschnittstellenbereich angeordnet sind, zum Durchsuchen der mehreren auf der Grundlage der extrahierten Hauptfarbwerte angeordneten Toninhalte und Abspielen von Toninhalt.

12. Verfahren nach Anspruch 11, das ferner Folgendes umfasst:
Abbilden der mehreren auf der Grundlage der extrahierten Hauptfarbwerte angeordneten Toninhalte in horizontaler Richtung des Benutzerschnittstellenbereichs und von Informationen bezüglich jedes der mehreren Toninhalte in vertikaler Richtung des Benutzerschnittstellenbereichs und
Bestimmen eines Toninhalts oder einer Information bezüglich des Toninhalts, der/die einem über eine Benutzerinteraktion ausgewählten Bereich entsprechend der horizontalen oder der vertikalen Richtung entspricht.

13. Verfahren nach Anspruch 12, das ferner Folgendes umfasst:
als Reaktion darauf, dass einer der mehreren Toninhalte, die auf der Grundlage der extrahierten Hauptfarbwerte angeordnet sind, der Benutzerinteraktion entsprechend ausgewählt wird, Bereitstellen von Informationen bezüglich des ausgewählten Toninhalts in einem Bereich, in dem ein Hauptfarbwert des ausgewählten Toninhalts durch Abstufung in vertikaler Richtung verarbeitet wird.

## Revendications

1. Appareil électronique (100), comprenant :
une unité d'affichage, configurée pour fournir un écran d'interface d'utilisateur (UI) (510), l'écran UI comprenant un élément UI (110) incluant une pluralité de zones, chaque zone correspondant respectivement à au moins un contenu sonore ; et
un processeur (120), configuré pour :
acquérir une valeur principale de couleur à partir d'images relatives, respectivement, aux contenus sonores, sur la base d'une valeur moyenne de couleur d'un objet qui dépasse une taille prédéfinie parmi les objets inclus dans l'image,
contrôler l'unité d'affichage pour qu'elle affiche l'élément UI (110), et
quand un appareil d'interface d'utilisateur (10) est situé au niveau d'une zone de la pluralité de zones, contrôler l'unité d'affichage pour qu'elle fournisse une image miniature d'un contenu sonore correspondant à ladite zone de la pluralité de zones sur l'élément UI (110), des images miniatures d'un contenu sonore correspondant à des zones différentes de ladite zone de la pluralité de zones n'étant pas affichées sur l'élément UI (110).

2. Appareil selon la revendication 1, dans lequel les images relatives à la pluralité de contenus sonores incluent au moins une image parmi une image d'album, une image miniature (200, 20) et une image d'icône des contenus sonores.

3. Appareil selon l'une quelconque des revendications 1 et 2, dans lequel le processeur est configuré pour afficher une pluralité d'images représentant chaque contenu sonore d'une pluralité de contenus sonores, et en réponse à la survenue d'un événement prédéterminé, pour trier la pluralité d'images d'identification par couleur sur la base d'une valeur principale de couleur de la pluralité d'images d'identification.

4. Appareil selon l'une quelconque des revendications 1 à 3, dans lequel l'unité d'affichage est configurée pour fournir une zone d'interface d'utilisateur pour parcourir la pluralité de contenus sonores qui sont disposés sur la base des valeurs principales de couleur extraites, et une UI de défilement pour guider un emplacement d'un contenu sonore qui est sélectionné par une interaction de défilement.

5. Appareil selon la revendication 4, dans lequel le processeur est configuré pour déterminer un contenu sonore correspondant à un emplacement de l'UI de défilement parmi la pluralité de contenus sonores qui sont disposés dans la zone d'interface d'utilisateur, et pour lire le contenu sonore.

6. Appareil selon la revendication 5, dans lequel le processeur est configuré pour faire concorder la pluralité de contenus sonores qui sont disposés sur la base des valeurs principales de couleur extraites avec une direction horizontale de la zone d'interface d'utilisateur, et une information relative à chaque contenu sonore de la pluralité de contenus sonores avec une direction verticale de la zone d'interface d'utilisateur, et est configuré pour déterminer un contenu sonore ou une information relative au contenu sonore qui correspond à une zone sélectionnée par une interaction d'utilisateur correspondant à la direction horizontale ou à la direction verticale.

7. Appareil selon la revendication 6, dans lequel le processeur, en réponse à la sélection, selon l'interaction d'utilisateur, d'un contenu sonore de la pluralité de contenus sonores qui sont disposés sur la base des valeurs principales de couleur extraites, est configuré pour fournir une information relative au contenu sonore sélectionné sur une zone où une valeur principale de couleur du contenu sonore sélectionné est traitée par dégradé dans une direction verticale.

8. Procédé de contrôle d'un appareil électronique comprenant une unité d'affichage qui fournit un écran d'interface d'utilisateur (UI), l'écran UI comprenant un élément UI (110) incluant une pluralité de zones, chaque zone correspondant respectivement à au moins un contenu sonore, et le procédé consistant à :
acquérir une valeur principale de couleur à partir d'images relatives, respectivement, aux contenus sonores, sur la base d'une valeur moyenne de couleur d'un objet qui dépasse une taille prédéfinie parmi les objets inclus dans l'image ;
afficher l'élément UI (110) ; et
quand un appareil d'interface d'utilisateur (10) est situé au niveau d'une zone de la pluralité de zones, contrôler l'unité d'affichage pour qu'elle fournisse une image miniature d'un contenu sonore correspondant à ladite zone de la pluralité de zones sur l'élément UI (110), des images miniatures d'un contenu sonore correspondant à des zones différentes de ladite zone de la pluralité de zones n'étant pas affichées sur l'élément UI (110).

9. Procédé selon la revendication 8, dans lequel les images relatives à la pluralité de contenus sonores incluent au moins une image parmi une image d'album, une image miniature et une image d'icône des contenus sonores.

10. Procédé selon l'une quelconque des revendications 8 et 9, consistant en outre à :
afficher une pluralité d'images représentant chaque contenu sonore d'une pluralité de contenus sonores ; et
en réponse à la survenue d'un événement prédéterminé, trier la pluralité d'images d'identification par couleur sur la base d'une valeur principale de couleur de la pluralité d'images d'identification.

11. Procédé selon l'une quelconque des revendications 8 à 10, dans lequel le contenu inclut un contenu sonore, et le procédé consistant en outre à :
déterminer un contenu sonore correspondant à un emplacement d'une UI de défilement guidant un emplacement d'un contenu sonore sélectionné, selon une interaction de défilement, parmi une pluralité de contenus sonores qui sont disposés dans une zone d'interface d'utilisateur pour parcourir la pluralité de contenus sonores disposés sur la base des valeurs principales de couleur extraites, et lire le contenu sonore.

12. Procédé selon la revendication 11, consistant en outre à :
faire concorder la pluralité de contenus sonores qui sont disposés sur la base des valeurs principales de couleur extraites avec une direction horizontale de la zone d'interface d'utilisateur, et une information relative à chaque contenu sonore de la pluralité de contenus sonores avec une direction verticale de la zone d'interface d'utilisateur ; et
déterminer un contenu sonore ou une information relative au contenu sonore qui correspond à une zone sélectionnée par une interaction d'utilisateur correspondant à la direction horizontale ou à la direction verticale.

13. Procédé selon la revendication 12, consistant en outre à :
en réponse à la sélection, selon l'interaction d'utilisateur, d'un contenu sonore de la pluralité de contenus sonores qui sont disposés sur la base des valeurs principales de couleur extraites, fournir une information relative au contenu sonore sélectionné sur une zone où une valeur principale de couleur du contenu sonore sélectionné est traitée par dégradé dans une direction verticale.
